# EUROPEAN PATENT APPLICATION

(11) **EP 1 836 891 A1**
(43) Date of publication of application: **26.09.2007**
(21) Application number: 05822582.2
(22) Date of filing: 27.12.2005
(51) Int. Cl.: A01G 27/00, A01G 9/02

(54) **PLANT CULTURING DEVICE**

(30) Priority: 27.12.2004 JP 2004376441
(71) Applicant: SUNTORY LIMITED, Osaka-shi, Osaka 530-8203 (JP)
(72) Inventor: HASHIMOTO, Masaki, 5670835 (JP); MIYAGAWA, Katsuro, 5691022 (JP); NAKAMURA, Saori, 5690061 (JP)
(74) Representative: Vossius & Partner
(86) International application number: PCT/JP2005/023857
(87) International publication number: WO 2006/070784

(57) **Abstract**

To allow distribution of culturing liquid throughout culture medium in a short operation time, without having to additionally provide a supply passage communicated with a tank or a supply pump. A plant culturing apparatus includes a culturing vessel 1 for a plant A, a tank 3 for culturing liquid 2, a communication passage 4 communicating between the vessel 1 and the tank 3, and a pump P incorporated in the communication passage 4, the pump being capable of being switched over between a condition for feeding the reserved liquid 5 to the culturing vessel and a further condition for introducing into the tank, excess liquid 6 and aeration air 7. The communication passage is communicated with the culturing vessel from the bottom side thereof. To the communication passage, there is branch-connected a supply passage 12 capable of feeding the reserved liquid to the culturing vessel from a planting opening side. There is provided a switching portion 16 capable of selectively providing a condition for communicating the supply passage to said tank and a further condition for communicating the communication passage to the tank. The pump is disposed upstream of the branching-connecting portion of the supply passage in a culturing liquid supplying direction.

## Description

### TECHNICAL FIELD

The present invention relates to a plant culturing apparatus including a culturing vessel capable of culturing a plant therein, a tank capable of reserving a culturing liquid for the plant therein, a communication passage communicating between the vessel and the tank, and a pump incorporated in the communication passage, the pump being capable of being switched over between a condition for feeding the reserved liquid in the tank to the culturing vessel and a further condition for introducing into the tank, excess liquid from the culturing liquid fed to the culturing vessel and aeration air for bubbling in the reserved liquid.

### BACKGROUND ART

With the plant culturing apparatus having the above-described construction, by switching over the pump incorporated in the communication passage communicating between the culturing vessel and the tank between a condition for feeding the reserved liquid to the culturing vessel and a further condition for introducing into the tank, excess liquid from the culturing liquid fed to the culturing vessel, the excess liquid can be positively returned to the tank for preventing root rot of the plant and the culturing liquid can be used efficiently, without having to provide separately an additional passage for returning the excess liquid to the tank. In addition, since the aeration air for bubbling in the reserved liquid can be introduced into the tank for supplying oxygen to the culturing liquid reserved in the tank, decay of the culturing liquid can be effectively avoided and culturing liquid rich in oxygen dissolved therein can be supplied to the culturing vessel.

With the above-described plant culturing apparatus according to the convention, through the communication passage communicating with the culturing vessel from the bottom side of the vessel, the reserved liquid in the tank is supplied to the culturing vessel from the vessel bottom side (see e.g. Patent Document 1).

Patent Document 1: Japanese Patent Application "Kokai" No. 2004-24029

### DISCLOSURE OF THE INVENTION

### PROBLEM TO BE SOLVED BY INVENTION

For the above reason, if it is desired to cause the culturing liquid to be distributed to substantially entire medium within the culturing vessel, it is necessary to operate the pump for a long time to supply a large amount of culturing liquid to the culturing vessel from the vessel bottom side so that the liquid level inside the culturing vessel may reach the vicinity of the surface of the medium. Hence, there is the drawback of requiring a long time for the operation.

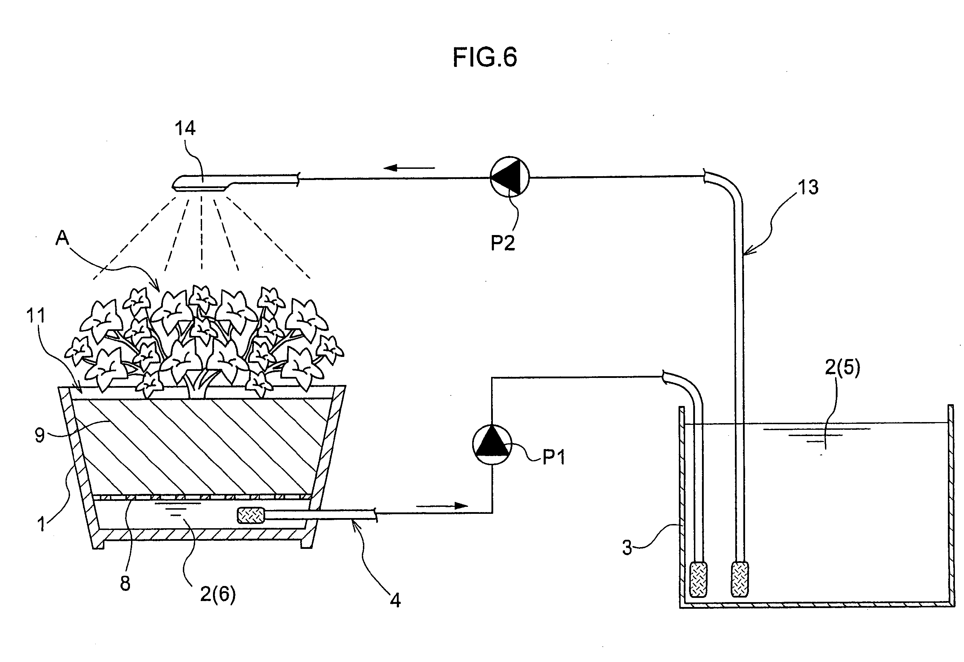

Then, in order to overcome this drawback, as shown in Comparison Example shown in Fig. 6 for instance, a following construction is conceivable. Namely, in addition to a communication passage 4 communicated with a culturing vessel 1 from the bottom side thereof and a pump P1 for introducing through this communication passage 4 excess liquid or aeration air into a tank 3, the tank 3 is communicated separately with a supply passage 13 capable of supplying reserved liquid 5 to the culturing vessel 1 from a planting opening 11 side and a supply pump P2 is incorporated in this supply passage 13. In operation, when culturing liquid 2 is supplied to the culturing vessel 1, this is supplied through the supply passage 13 from the opening 11 side, so that the culturing liquid 2 may flow down from the surface of a medium 9 to and through the inside thereof to the lower of the vessel. With this, the culturing liquid 2 may be distributed through substantially entire medium 9, even if this liquid 2 is smaller in amount than the convention, that is, without requiring such long time operation of the pump .

However, in this case, although the respective pumps P1, P2 can have fixed suctioning/discharging directions, it is necessary to additionally provide the supply passage 13 communicated with the tank 3 and the supply pump P2. So, there are the drawbacks of increased manufacturing cost and complicated construction.

The present invention has been made in view of the above-described state of the art. The object of the invention is to allow distribution of culturing liquid throughout the culture medium in a short operation time, without having to additionally provide a supply passage communicated with the tank or the supply pump, while maintaining the advantages of the ability to use the culturing liquid efficiently and preventing root rot of the plant as well as decay of the culturing liquid and the ability to feed culturing liquid rich in residual oxygen amount to the culturing vessel.

### MEANS TO SOLVE THE PROBLEM

According to a characterizing feature of a plant culturing apparatus relating to the present invention, the plant culturing apparatus includes a culturing vessel capable of culturing a plant therein, a tank capable of reserving a culturing liquid for the plant therein, a communication passage communicating between the vessel and the tank, and a pump incorporated in the communication passage, the pump being capable of being switched over between a condition for feeding the reserved liquid in the tank to the culturing vessel and a further condition for introducing into the tank, excess liquid from the culturing liquid fed to the culturing vessel and aeration air for bubbling in the reserved liquid; wherein said culturing vessel includes an opening capable of planting the plant therein; said communication passage is communicated with said culturing vessel from the bottom side thereof; to said communication passage, there is branch-connected a supply passage capable of feeding the reserved liquid to the culturing vessel from said opening side; there is provided a switching portion capable of selectively providing a condition for communicating said supply passage to said tank and a further condition for communicating said communication passage to said tank; and said pump is disposed upstream of the branching-connecting portion of the supply passage in a culturing liquid supplying direction.

With the plant culturing apparatus having this construction, for supplying the reserved liquid in the tank to the culturing vessel, the condition is switched over to the condition for communicating the supply passage with the tank and also the pump is switched over to the condition for feeding the reserved liquid in the tank to the culturing vessel, so that the culturing liquid is supplied to the culturing vessel from the opening side so as to flow so as to permeate the medium from its surface to the inside thereof and then flow down at the lower portion of the vessel, whereby it becomes possible to supply a smaller amount of culturing liquid to the culturing vessel than the convention. That is, without having to operate the pump for a long time, the culturing liquid can be distributed to substantially entire medium in the culturing vessel.

Further, for introducing the excess liquid and the aeration air to the tank, the condition is switched over to the condition for communicating the communication passage with the tank and the pump is switched over to the condition for introducing the excess liquid and the aeration air into the tank. With this, it becomes possible to positively introduce the excess liquid into the tank, so that the culturing liquid can be used efficiently and root rot of the plant can be prevented. Further, by the introduction of the aeration air into the tank, decay of the culturing liquid can be prevented and culturing liquid rich residual oxygen content can be supplied to the culturing vessel.

Further, since the communication passage is communicated with said culturing vessel from the bottom side thereof, a supply passage is branch-connected to the communication passage and the pump is disposed upstream of the branching-connecting portion of the supply passage in a culturing liquid supplying direction, it is possible for the single pump to supply the reserved liquid in the tank to the culturing vessel and also to introduce the excess liquid and the aeration air into the tank.

Therefore, it is possible to distribute the culturing liquid throughout the culture medium in a short operation time, without having to additionally provide a supply passage communicated with the tank or the supply pump, while maintaining the advantages of the ability to use the culturing liquid efficiently and preventing root rot of the plant as well as decay of the culturing liquid and the ability to feed culturing liquid rich in residual oxygen amount to the culturing vessel.

In the plant culturing apparatus of the present invention, the culturing vessel includes a plurality of said openings vertically offset relative to each other, and said supply passage is capable of feeding the reserved liquid from each one of said openings.

In the case of the conventional plant culturing apparatus, the communication passage is communicated with the culturing vessel from the bottom side of the vessel, so that the culturing liquid in the tank is fed to the culturing vessel from the bottom side of the vessel. Therefore, in case a plurality of openings capable of planting plants therein are provided in the culturing vessel with vertical offset relative to each other, there is the possibility that before a sufficient amount of culturing liquid can be fed to the medium of the plant planted in each opening, the culturing liquid may flood from those openings located at lower positions, so that a sufficient amount of culturing liquid cannot be fed to the plants planted in those openings located at higher positions and the culturing liquid cannot be used efficiently and moreover the flooding culturing liquid may soil e.g. the floor surface.

In the above respect, in the case of the plant culturing apparatus according to the present invention, the culturing vessel includes a plurality of said openings vertically offset relative to each other, and said supply passage is capable of feeding the reserved liquid from each one of said openings. Therefore, it is possible to feed the culturing liquid from the opening side to the medium of the plant planted in each other, so as to permeate the medium from its surface to the inside thereof and then flow down at the lower portion of the vessel.

Therefore, a sufficient amount of culturing liquid can be readily supplied also to those plants planted in the openings located at the higher positions. Further, the culturing liquid can be used efficiently and there is little risk of the culturing liquid soiling the floor surface or the like.

In the plant culturing apparatus of the present invention, said pump can be constructed as a tube pump.

With the plant culturing apparatus having the above-described construction, the pump is constructed as a tube pump which can be formed compact and generate less vibration and noise in its driving condition, as compared with a vacuum pump or a compressor. Therefore, the apparatus can be readily installed in such place as a balcony, sun room, or a room of a private house, without damaging its environment.

### BEST MODE OF EMBODYING THE INVENTION

Next, embodiments of the present invention will be described with reference with the accompanying drawings. In the drawings, those components denoted with the same reference marks as used in the conventional construction represent identical or corresponding components thereto.

### [First Embodiment]

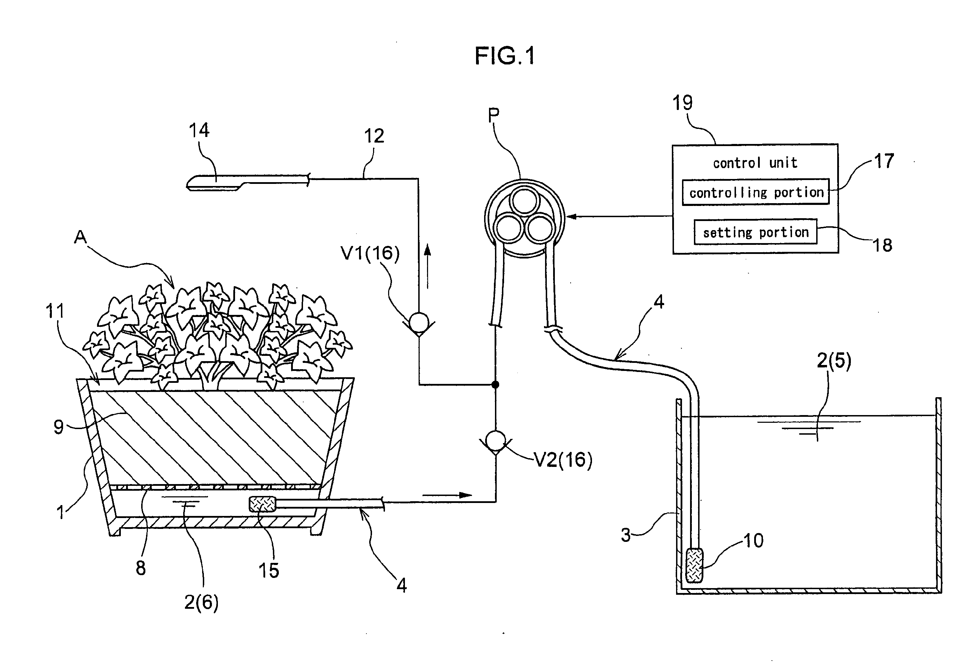

Fig. 1 shows a plant culturing apparatus according to the present invention. The apparatus includes a culturing vessel 1 formed of resin and capable of culturing a plant A therein, a tank 3 capable of reserving culturing liquid 2 containing fertilizer components and antiseptic components dissolved in water for the plant A, and a communication passage 4 communicating between the vessel 1 and the tank 3. In the communication passage 4, there is incorporated a pump P capable of being switched over between a condition for feeding the reserved liquid (culturing liquid) 5 in the tank 3 to the culturing vessel 1 and a further condition for introducing into the tank 3, excess liquid 6 from the culturing liquid 2 fed to the culturing vessel 1 and aeration air 7 for bubbling in the reserved liquid 5.

Referring to the culturing vessel 1, at the inner bottom portion thereof, a catch basin 8 is provided. So that, on the upper face side of the catch basin 8,there can be accommodated a culture medium 9 for culturing the plant A. Examples of the culture medium 9 include natural media such as compost, leaf mold, peat moss, as well as artificial media such as vermiculite, pearlite, rock wool, hydro ball, sponge, etc. and on the bottom face side of the catch basin 8, excess liquid 6 can be reserved.

The communication passage 4 is constructed of a resin tube having flexibility and is inserted into the culturing vessel 1 from the bottom side thereof. Further, a filter 10 connected to one end of the tube 4 is introduced into the reserved liquid 5 and a filter 15 connected to the other end thereof is inserted to the lower side of the catch basin 8 so as to prevent intrusion of foreign object into the communication passage 4.

Further, to the communication passage 4, there is branch-connected a supply passage 12 capable of feeding the reserved liquid 5 to the culturing vessel 1 from a planting opening 11 side. And, a nozzle 14 connected to an end of this passage 12 is supported upwardly of the opening 11 so that the culturing liquid 2 can be supplied like a shower from the opening 11 side to the surface of the medium 9.

And, there is provided a switching portion 16 capable of selectively providing a condition for communicating this supply passage 12 to the tank 3 and a further condition for communicating the communication passage 4 to the tank 3. And, pump P is disposed upstream of the branching-connecting portion of the supply passage 12 from the communication passage 4 in a culturing liquid supplying direction.

The switching portion 16 consists essentially of a first check valve V1 incorporated in the supply passage 12 and a second check valve V2 incorporated in the communication passage 4. The first check valve V1 is configured to allow only flow of the culturing liquid 2 from the pump P side to the opening 11 side. The second check valve V2 is configured to allow only flows of the excess liquid 6 or the aeration air 7 from the vessel bottom side to the pump P side.

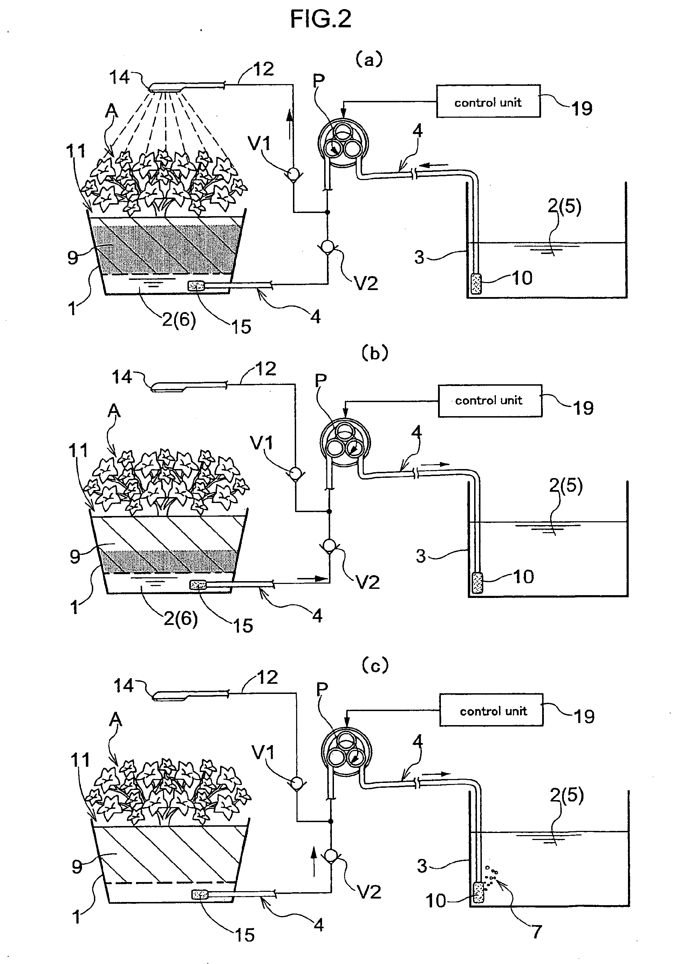

The pump P is an electric driven tube pump ("Peristapump" (registered trademark)). For this pump P, there is provided a control unit 19 including a controlling portion 17 capable of automatic switchover between a condition for feeding the reserved liquid 5 in the tank 3 via the supply passage 12 to the culturing vessel 1 from the opening 11 side as illustrated in Fig. 2 (a) and a further condition for introducing the excess liquid 6 into the tank 3 through the communication passage 4 as illustrated in Fig. 2 (b) or feeding air, which has entered the lower side of the catch basin 8 in association with the introduction of the excess liquid 6 into the tank 3, as an aeration air 7 into the tank 3 via the communication passage 4 as shown in Fig. 2 (c) and a setting portion 18 for allowing setting of various control modes such as a driving interval of the tube pump P and suctioning/discharging directions, etc. With these, automatic watering of the culturing liquid 2 to the culturing vessel 1 is made possible.

### [Second Embodiment]

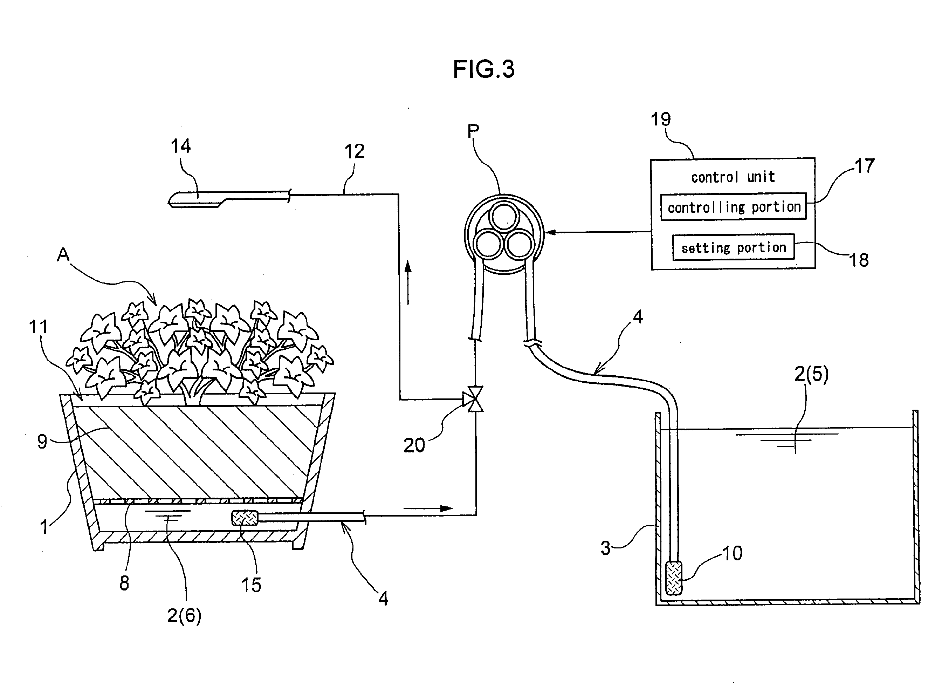

Fig. 3 shows a second embodiment of the plant culturing apparatus according to the present invention. In this second embodiment, in place of the switching portion 16 used in the first embodiment, a three-way valve 20 is provided at the branch-connection between the supply passage 12 and the communication passage 4. The rest of the construction of this embodiment is identical to the plant culturing apparatus of the first embodiment.

In the case of the plant culturing apparatus according to the second embodiment, with switchover operations of the three-way valve, there can be selectively provided the condition for communicating the supply passage 12 to the tank 3 and the further condition for communicating the communication passage 4 to the tank 3. In this case, since there is no need of providing two check valves used in the first embodiment, the construction of the plant culturing apparatus can be simplified.

### [Third Embodiment]

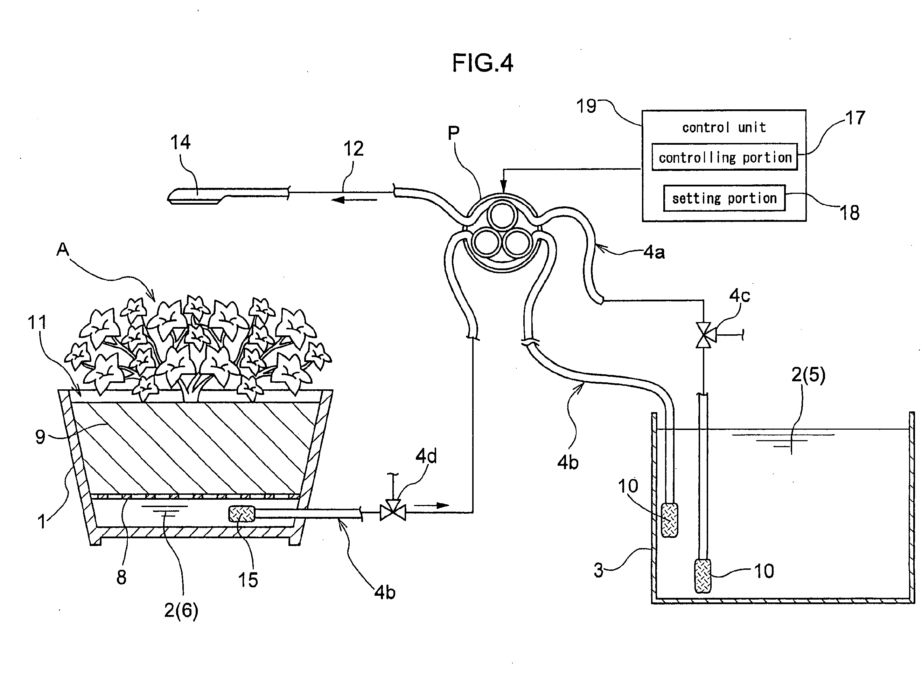

Fig. 4 shows a third embodiment of the plant culturing apparatus according to the present invention. In this third embodiment, there are provided two tube lines pumped by the tube pump P. Specifically, there are provided a first tube 4a for feeding the culturing liquid 5 from the tank 3 to the supply passage 12 and a second tube 4b for transporting the excess liquid 6 from the culturing vessel 1 to the tank 3. Further, an air valve 4c is incorporated in the first tube 4a on the upstream side of the tube pump P and an air valve 4d is incorporated in the second tube 4b on the upstream side of the tube pump P, respectively.

With the plant culturing apparatus according to this third embodiment, the transport of the culturing liquid 5 from the tank 3 to the supply passage 12 and the transport of the excess liquid 6 from the culturing vessel 1 to the tank 3 are possible, without changing the rotational direction of the tube pump P. Specifically, if the tube pump P is driven with the air valve 4c being closed, the culturing liquid 5 is transported from the tank 3 to the supply passage 12. And, if the tube pump P is driven with the air valve 4d being closed, the excess liquid 6 or the air is transported from the culturing vessel 1 to the tank 3.

In order to prevent the tube pump P from suctioning the culturing liquid 5 or the excess liquid 6, this is possible by opening the air valve 4c or 4d. In this case, as air is introduced into the each tube 4a or 4b, liquid transport can be stopped.

### [Fourth Embodiment]

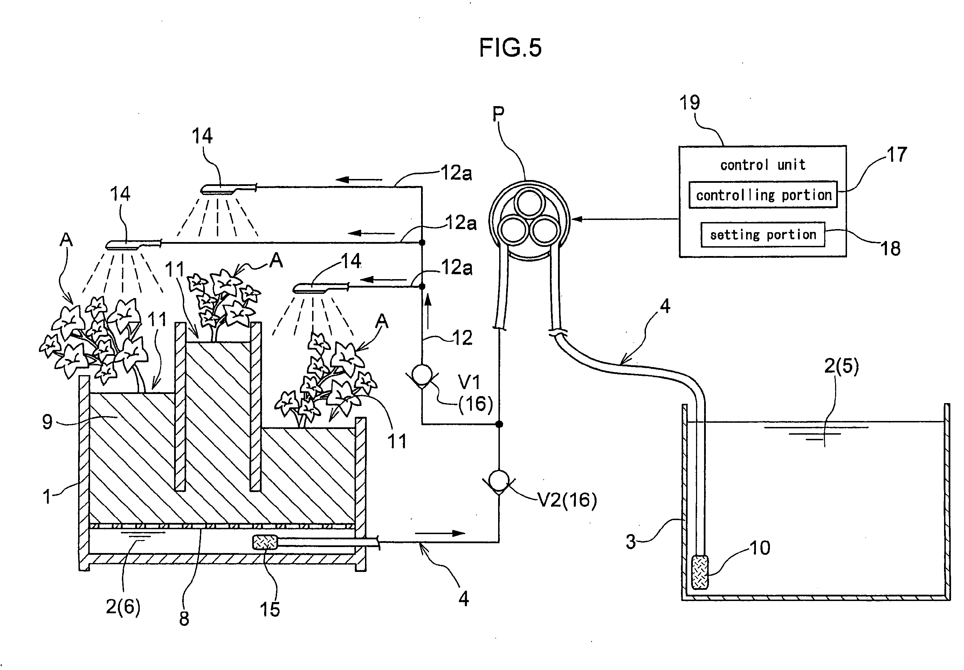

Fig. 5 shows a fourth embodiment of the plant culturing apparatus according to the present invention, wherein the culturing vessel 1 includes a plurality of openings 11 each capable of planting a plant A therein, with these openings 11 being vertically offset with each other. And, the supply passage 12 is divided into a plurality of branch supply passages 12a, so that the reserved liquid 5 may be supplied through each branch supply passage 12a from each opening 11 side.

The rest of the construction is identical to the first embodiment.

### [Other Embodiments]

1. In the plant culturing apparatus according to the present invention, the end of the supply passage capable of supplying the reserved liquid to the culturing vessel from the opening side thereof can be exposed upwardly adjacent the surface of the medium or can be exposed to the inside of the medium adjacent its surface.
2. In the plant culturing apparatus according to the present invention, the switching portion can selectively provide the condition for communicating the supply passage to the tank and the further condition for communicating the communication passage to the tank in association with an opening/ closing operation of a valve such as a switching valve.
   In this case, the opening/closing operation of the valve can be effected manually. But, instead, there can be provided a controlling portion for automatically controlling the opening/closing operation of the valve in association with an operation (control) for changing the suctioning/discharging direction of the pump.
3. In the plant culturing apparatus according to the present invention, e.g. an inlet stopcock for the aeration air can be provided in the communication passage on the side closer to the culturing vessel than the switching portion to be opened/closed, so that air present outside the culturing vessel may be suctioned in as the aeration air through the stopcock to be introduced into the tank.

### INDUSTRIAL APPLICABILITY

With the plant culturing apparatus according to the present invention, it is possible to cause the culturing liquid to be distributed over substantially entire medium within the culturing vessel without requiring long time operation of the pump. Therefore, the inventive plant culturing apparatus can be used not only for industrial purpose, but also for domestic purpose, being applicable for a great variety of usages.

### BRIEF DESCRIPTION OF THE DRAWINGS

[Fig. 1] an explanatory view of a plant culturing apparatus,
[Fig. 2] an explanatory view of an operational condition of the plant culturing apparatus,
[Fig. 3] an explanatory view of a second embodiment,
[Fig. 4] an explanatory view of a third embodiment,
[Fig. 5] an explanatory view of a fourth embodiment,
[Fig. 6] an explanatory view of a comparison example.

### DESCRIPTION OF REFERENCE MARKS

- 1.: culturing vessel
- 2: culturing liquid
- 3: tank
- 4: communication passage
- 5: reserved liquid
- 6: excess liquid
- 7: aeration air
- 11: opening
- 12: supply passage
- 16: switching portion
- A: plant
- P: pump

## Claims

1. A plant culturing apparatus comprising: a culturing vessel capable of culturing a plant therein, a tank capable of reserving a culturing liquid for the plant therein, a communication passage communicating between the vessel and the tank, and a pump incorporated in the communication passage, the pump being capable of being switched over between a condition for feeding the reserved liquid in the tank to the culturing vessel and a further condition for introducing into the tank, excess liquid from the culturing liquid fed to the culturing vessel and aeration air for bubbling in the reserved liquid;
wherein said culturing vessel includes an opening capable of planting the plant therein;
said communication passage is communicated with said culturing vessel from the bottom side thereof; to said communication passage, there is branch-connected a supply passage capable of feeding the reserved liquid to the culturing vessel from said opening side;
there is provided a switching portion capable of selectively providing a condition for communicating said supply passage to said tank and a further condition for communicating said communication passage to said tank; and
said pump is disposed upstream of the branching-connecting portion of the supply passage in a culturing liquid supplying direction.

2. The plant culturing apparatus according to claim 1, wherein said culturing vessel includes a plurality of said openings vertically offset relative to each other, and
said supply passage is capable of feeding the reserved liquid from each one of said openings.

3. The plant culturing apparatus according to claim 1 or 2,
wherein said pump is constructed as a tube pump.
